# EUROPEAN PATENT SPECIFICATION

(11) **EP 3 349 063 B1**
(45) Date of publication and mention of the grant of the patent: **02.06.2021**
(21) Application number: 18151619.6
(22) Date of filing: 15.01.2018
(51) Int. Cl.: G03B 17/55, H04N 5/225, G03B 17/08, B60R 11/04, G02B 27/00

(54) **HEAT GENERATING DEVICE FOR IMAGING SECTION, AND IMAGING DEVICE**
WÄRMEERZEUGUNGSVORRICHTUNG FÜR EINEN ABBILDUNGSABSCHNITT UND ABBILDUNGSVORRICHTUNG
DISPOSITIF DE GÉNÉRATION DE CHALEUR POUR UNE SECTION D'IMAGERIE ET DISPOSITIF D'IMAGERIE

(30) Priority: 17.01.2017 JP 2017006191
(43) Date of publication of application: 18.07.2018
(73) Proprietor: Kabushiki Kaisha Tokai Rika Denki Seisakusho, Ohguchi-cho Niwa-gun Aichi 480-0195 (JP)
(72) Inventor: INAYAMA, Masahide, Niwa-gun,, Aichi 480-0195 (JP)
(74) Representative: TBK

(56) References cited:
- EP-A1- 1 626 583
- JP-A- 2015 058 780
- KR-A- 20130 085 928
- US-A1- 2012 170 119

## Description

### BACKGROUND

### Field of the Invention

The present disclosure relates to a heat generating device for an imaging section, and to an imaging device.

### Related Art

In the heat generating device disclosed in Japanese Patent Application Laid-Open (JP-A) No. 2007-35474, deformation of a sheet-like heat generating body by external force is made possible by providing plural slits in the surface of the sheet-like heat generating body. On the other hand, in a case in which this sheet-like heat generating body is provided at an imaging device for a vehicle, there is the possibility that the terminals and wires for supplying electric power may become problematic in terms of saving space of the imaging device. A further heated camera is shown in EP 1 626 583 A1.

### SUMMARY

In view of the above-described circumstances, a heat generating device and an imaging device that can save space is obtained.

A heat generating device for an imaging section of a first aspect and of claim 1 has: a heating portion at which is provided a heating body that heats a light transmitting member that covers an obverse side of a lens of an imaging section; a base portion that is fixed to a side surface of a holding member that holds the imaging section, and at which a terminal that supplies electric power to the heating body is provided; and a connecting portion that connects the heating portion and the base portion, and that is foldable, wherein a metal layer is provided at a surface of the light transmitting member, the heating portion is affixed to the metal layer, and the heat generating device is a sheet-shaped member that is flexible.

In a heat generating device for an imaging section of a second aspect and of claim 2, in the heat generating device of the first aspect, the heating portion, the connecting portion and the base portion are integrally formed, and the connecting portion is configured as a constricted portion at the heat generating device.

An imaging device of a third aspect and of claim 3 has: the heat generating device of the first aspect or the second aspect; a covering body in which the heat generating device and the holding member are accommodated; a connector that is connected to the terminal by being inserted therein; and a rib that projects out in an insertion direction of the connector at an inner surface of the covering body, and that can abut the connector in a case in which the covering body is mounted.

In the heat generating device for an imaging section of the first aspect, the heating portion at which the heating body is provided, and the base portion at which the terminal that supplies electric power to the heating body is provided, are connected by the connecting portion. Further, at the heat generating device, the heating portion and the base portion can be folded at the connecting portion, and space can be saved.

In the heat generating device for an imaging section of the second aspect, due to the connecting portion structuring a constricted portion at the heat generating device, the reaction force that tries to undo the folding can be decreased when the heat generating device is folded at the connecting portion.

In the imaging device of the third aspect, at the covering body in which the heat generating device of the first or second aspect and the holding member are accommodated, the rib that projects-out in the insertion direction of the connector is provided, and the rib can abut the connector. Due thereto, the connector coming apart from the terminal is suppressed.

### BRIEF DESCRIPTION OF THE DRAWINGS

Exemplary embodiments will be described in detail with reference to the following figures, wherein:
Fig. 1 is a perspective view that is seen from an obliquely rear and upper side of a vehicle, and that shows an imaging device relating to a first exemplary embodiment;
Fig. 2 is a plan sectional view of the imaging device relating to the first exemplary embodiment;
Fig. 3 is a side sectional view of the imaging device relating to the first exemplary embodiment;
Fig. 4 is a cross-sectional view in which a cover glass of the imaging device relating to the first exemplary embodiment, and objects attached to the cover glass, are enlarged;
Fig. 5 is a plan view of a heat generating unit at the imaging device relating to the first exemplary embodiment;
Fig. 6 is a cross-sectional view in which a cover glass of an imaging device relating to a second exemplary embodiment, and objects attached to the cover glass, are enlarged; and
Fig. 7 is a cross-sectional view in which a cover glass of an imaging device relating to a third exemplary embodiment, and objects attached to the cover glass, are enlarged.

### DETAILED DESCRIPTION

### [First Exemplary Embodiment]

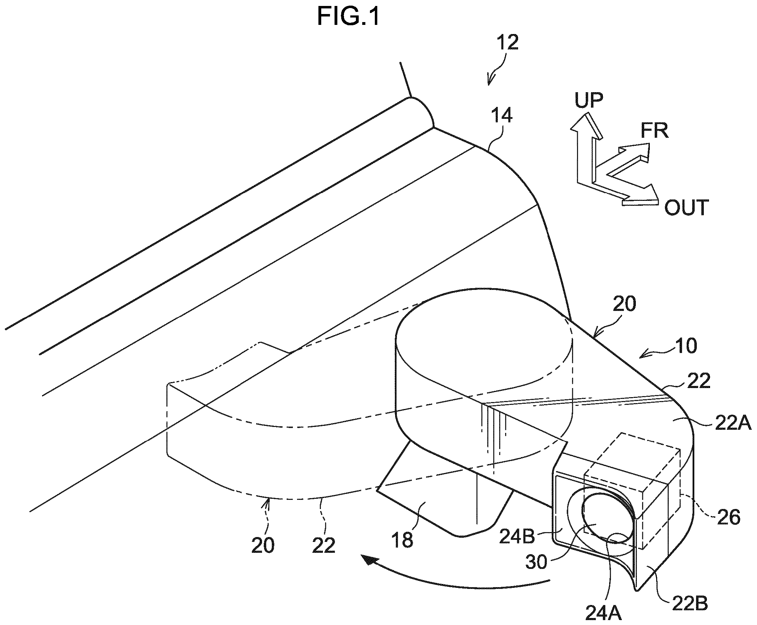

An imaging device 10 relating to a first exemplary embodiment is shown in Fig. 1 in a perspective view that is seen from an obliquely rear and upper side of a vehicle. Note that, in the drawings, the vehicle forward direction is indicated by arrow FR, a vehicle width direction outward direction (the vehicle rightward direction) is indicated by arrow OUT, and upward is indicated by arrow UP.

As shown in Fig. 1, the imaging device 10 relating to the present exemplary embodiment is set so as to face outwardly in the vehicle width direction, at the vehicle front side end of a vertical direction intermediate portion of a side door 14 (a front side door) that structures the vehicle body side of a vehicle 12. A camera unit 20 is formed so as to be able to rotate from the vehicle width direction outer side toward the vehicle rear side (refer to the two-dot chain line in Fig. 1).

A stay 18, which is block-shaped and serves as a setting body that structures the vehicle body side, is provided at the imaging device 10. The imaging device 10 is set at the side door 14 due to the stay 18 being fixed to the side door 14.

The base end portion of the camera unit 20 (outer camera unit), which is shaped as a substantially L-shaped pillar as seen in plan view, is supported at the upper side of the stay 18. The base end side portion of the camera unit 20 extends toward the vehicle width direction outer side. The distal end side portion of the camera unit 20 extends toward the vehicle rear side.

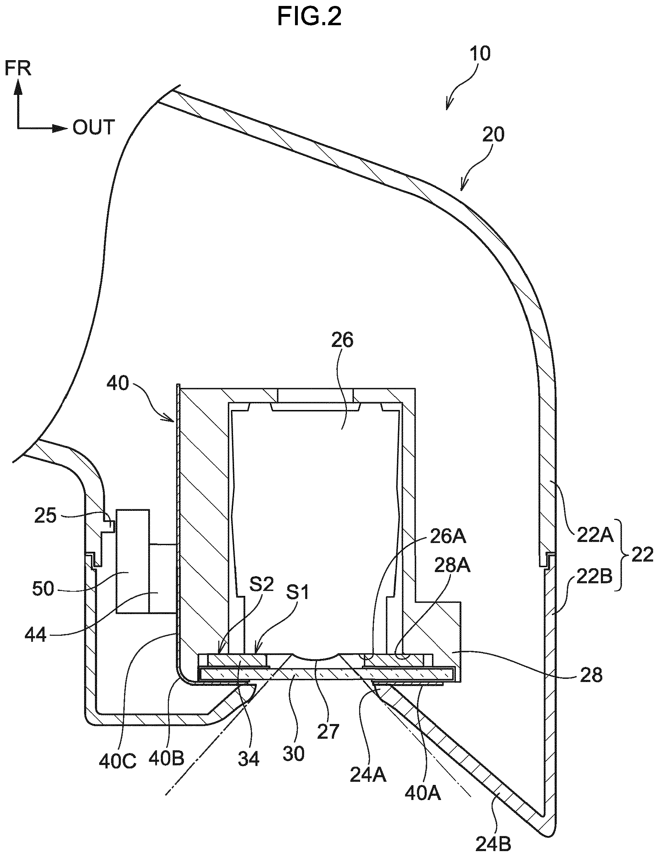

The outer periphery of the camera unit 20 is structured by a visor 22 that serves as a covering body and that is shaped as a substantially L-shaped box as seen in plan view. The visor 22 has a main body portion 22A that extends along the vehicle width direction, and a cap portion 22B that extends toward the vehicle rear side from the vehicle width direction outer side of the main body portion 22A. Here, as shown in Fig. 2, a rib 25 projects-out toward the vehicle width direction outer side at a wall portion that is at the vehicle width direction inner side, in a vicinity of the connected portion of the main body portion 22A and the cap portion 22B. This rib 25 can abut a connector 50 that is described later. An exposure hole 24A that is circular is formed so as to pass-through the central portion of the distal end wall at the vehicle rear side of the cap portion 22B. This exposure hole 24A opens the distal end portion of the cap portion 22B to the vehicle rear side.

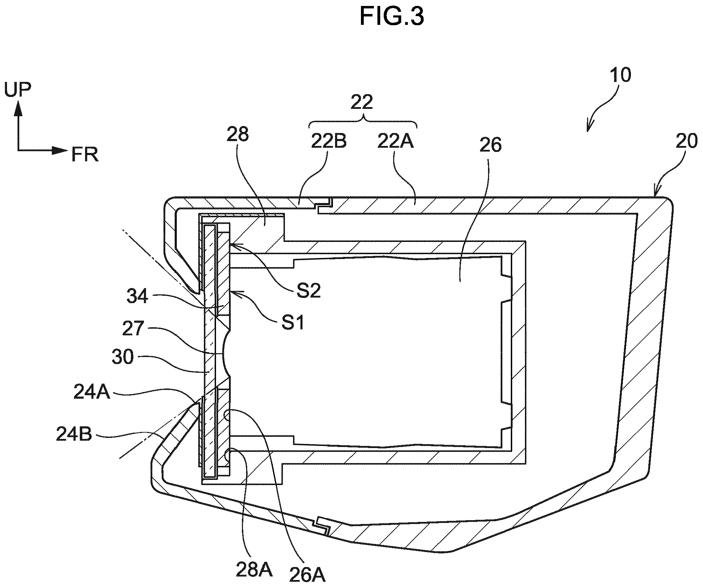

A covering portion 24B is formed at the distal end portion at the vehicle rear side of the cap portion 22B at the entire periphery of the exposure hole 24A (see Fig. 2 and Fig. 3). This covering portion 24B is disposed at the vehicle rear side with respect to the exposure hole 24A, and the portion thereof in the vicinity of the exposure hole 24A is inclined in a direction of heading toward the vehicle front side while heading toward the exposure hole 24A. Further, the portion, that is at the vehicle width direction outer side with respect to the vehicle width direction inner side portion, of the covering portion 24B projects-out toward the vehicle rear side (see Fig. 1 and Fig. 2).

Further, as shown in Fig. 2, a camera 26 that serves as an imaging section is accommodated at the interior of the visor 22 at the distal end side portion of the camera unit 20. This camera 26 is fixed to a camera bracket 28 that is shaped as a rectangular tube and is a holding member provided within the visor 22. A cover glass 30, which serves as a light transmitting member through which light is transmitted, is provided at the vehicle rear side end portion of the camera 26. This cover glass 30 structures a glass layer that is shaped as a circular plate. The cover glass 30 covers the surface (the obverse) at the vehicle rear side of a lens 27 of the camera 26, and is exposed at the vehicle rear side of the cap portion 22B via the exposure hole 24A of the cap portion 22B. The cover glass 30 is covered by the covering portion 24B at the entire periphery thereof (the entirety that is the vertical direction both sides and the vehicle width direction both sides).

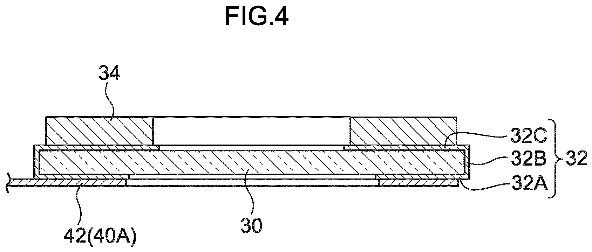

Fig. 4 is an enlarged sectional view of the cover glass 30 and members (objects) attached thereto. As shown in Fig. 4, a metal film 32 serving as a metal layer is provided at the surfaces of the cover glass 30. In detail, the metal film 32 has an obverse metal film 32A that is annular and is provided at the vehicle rear side surface (the obverse), a side surface metal film 32B that is provided at the entire outer peripheral surface (the side surfaces), and a reverse metal film 32C that is annular and is provided at the vehicle front side surface (the reverse).

The metal film 32 of the present exemplary embodiment is a film that is made of metal and is opaque, and is formed by vapor depositing a metal material such as gold, silver, copper, aluminum or the like on the glass surfaces of the cover glass 30. Note that the method of forming the metal film 32 is not limited to vapor deposition, and a spattering method, the printing of a metal paste, a coating method, or the like can be employed.

The metal film 32 is provided at least at other than at the range of the angle of view of the camera 26 at the cover glass 30, so as to not obstruct imaging by the camera 26. Here, as shown by the one-dot chain line of Fig. 2 and Fig. 3, the angle of view of the camera 26 widens in the vehicle vertical direction and the vehicle width direction the further from the obverse of the lens 27. As described above, at the cover glass 30, the obverse metal film 32A and the reverse metal film 32C are formed in annular shapes, and the central portions thereof are open in circular shapes. Further, the metal film 32 of the present exemplary embodiment is provided in accordance with the range of the angle of view of the camera 26. At the cover glass 30, at the range thereof at which the metal film 32 is not provided, i.e., the portion that is open, the obverse metal film 32A is wider than the reverse metal film 32C.

As shown in Fig. 2 and Fig. 3, the cover glass 30 at which the metal film 32 is provided as described above is fixed via a waterproof tape 34 that is elastic to the camera 26 and the camera bracket 28. Concretely, the waterproof tape 34 is a double-sided tape that is substantially annular, and is formed to a size that is included within the range in which the reverse metal film 32C is formed. Further, one surface of the waterproof tape 34 is affixed to the reverse metal film 32C of the metal film 32. On the other hand, a camera front surface 26A, which is the surface of the camera 26 at the vehicle rear side, and a mounting surface 28A, which is provided at a stepped portion that is at the vehicle rear side of the camera bracket 28, are surfaces that are formed at the same position in the front and rear direction of the camera 26. Further, the other surface of the waterproof tape 34 that is affixed to the cover glass 30 is affixed so as to bridge across the camera front surface 26A and the mounting surface 28A, and, due thereto, the cover glass 30 is fixed to the camera bracket 28. Note that, at the time when the cap portion 22B is mounted to the main body portion 22A, the covering portion 24B of the cap portion 22B may push the cover glass 30 so as to compress the waterproof tape 34. Due thereto, the degree of close contact or adhesion of the cover glass 30 and the camera 26 increases, and the degree of close contact or adhesion of the cover glass 30 and the camera bracket 28 increases. Further, by the waterproof tape 34, the cover glass 30 and the camera 26 form a sealed portion (a first sealed portion S1), and the cover glass 30 and the camera bracket 28 form a sealed portion (a second sealed portion S2).

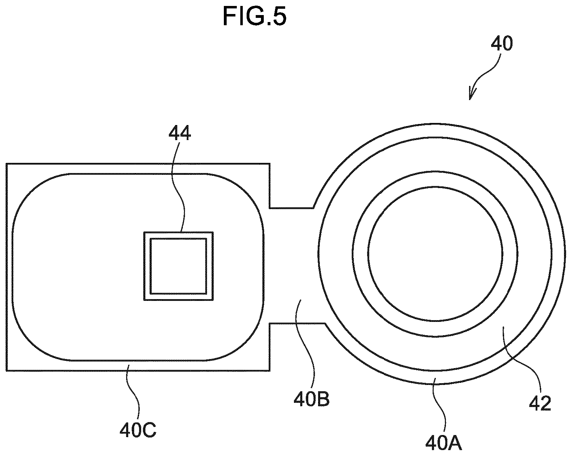

On the other hand, a heat generating portion 40A that is described later is mounted to the cover glass 30 at which the metal film 32 is provided, by being affixed to the obverse metal film 32A. Fig. 5 is a drawing showing the exterior appearance of a heat generating unit 40 before being accommodated at the interior of the visor 22. As shown in Fig. 5, the heat generating unit 40 which is a heat generating device for an imaging section has the heat generating portion 40A that serves as a heating portion and at which is provided a heat generating body 42 that serves as a heating body that heats the cover glass 30, a base portion 40C at which is provided a terminal 44 that supplies electric power to the heat generating body 42, and a connecting portion 40B that connects the heat generating portion 40A and the base portion 40C. At the heat generating unit 40, the heat generating portion 40A, the connecting portion 40B and the base portion 40C are formed integrally by a sheet-shaped member that is flexible and/or soft and is insulating.

The heat generating portion 40A is formed in an annular shape at which the portion that is the range of the angle of view of the camera 26 is open. The heat generating body 42, that is a heat generating resistance element that is annular and that is formed concentrically with the heat generating portion 40A, is provided at the heat generating portion 40A.

The base portion 40C is provided at the side of the connecting portion 40B which side is opposite the side at which the heat generating portion 40A is located, and is a portion that is formed in a rectangular shape. The base portion 40C is the portion that, when the heat generating unit 40 is accommodated at the interior of the visor 22, is fixed to the side surface of the camera bracket 28. Double-sided tape that is used in mounting to the camera bracket 28 is affixed in advance to one surface of the base portion 40C. The terminal 44 to which the connector 50 (see Fig. 2) is connected is provided at the substantially central portion of another surface of the base portion 40C. At the terminal 44 of the present exemplary embodiment, the direction orthogonal to the surface at which the terminal 44 is mounted is the direction of insertion of the connector 50. Namely, the connector 50 and the terminal 44 are connected by the connector 50 being inserted in the terminal 44 along the insertion direction. Note that the rib 25 projects-out in the insertion direction of the connector 50 at the reverse surface (the surface at the side at which the camera 26 is accommodated) of the visor 22 (the main body portion 22A), and this rib 25 is can abut the connector 50. Further, an unillustrated printed wire is formed from the terminal 44 via the connecting portion 40B toward the heat generating body 42, and electric power is supplied from the terminal 44 to the heat generating body 42.

The connecting portion 40B is a portion that is substantially rectangular and that connects the heat generating portion 40A and the base portion 40C. The width of this connecting portion 40B is more narrow than the width of the heat generating portion 40A and the width of the base portion 40C, and forms a constricted (neck) portion at the heat generating unit 40. Further, as shown in Fig. 2, when the heat generating unit 40 is accommodated at the interior of the visor 22, the heat generating portion 40A and the base portion 40C are accommodated in an orthogonal state orthogonal to each other. At this time, the connecting portion 40B that is a constricted portion is the bent portion of the heat generating unit 40.

Operation of the present exemplary embodiment is described next.

The camera 26 of the present exemplary embodiment is electrically connected to a control device (not illustrated) that is within the vehicle 12. Due to the camera 26 being electrically operated by control of the control device, the camera 26 captures images of the vehicle rear side via the cover glass 30. A monitor (not illustrated) serving as a display section is electrically connected to the control device. The images that are captured by the camera 26 are displayed on the monitor by control of the control device. The monitor is disposed within the vehicle cabin of the vehicle 12, and a vehicle occupant of the vehicle (e.g., the driver) viewing the vehicle rear side is assisted by the vehicle occupant confirming the image displayed on the monitor (the image captured by the camera 26).

Further, by providing the heat generating unit 40 at the imaging device 10 and by forming the heat generating unit 40 so as to be able to heat the cover glass 30 which covers the obverse side of the lens 27 of the camera 26 in the present exemplary embodiment, moisture such as rain, frost, dew or the like that sticks to the cover glass 30 can be dried and removed. Here, in the conventional imaging device 10, the heat generating portion 40A is directly affixed to the glass surface of the cover glass 30. However, glass has poor thermal conductivity and it is difficult for heat of the heat generating body 42 to be transferred. Therefore, even if the heat generating body 42 is operated when rain, frost, dew or the like sticks to the cover glass 30, longer time is required to remove the stuck rain, frost dew or the like by drying, and longer time is required to ensure visibility.

In contrast, in the present exemplary embodiment, the metal film 32 that has good (high) thermal conductivity is provided at the glass surface of the cover glass 30, and the cover glass 30 at which the metal film 32 is provided has good thermal conductivity as compared with the cover glass 30 alone. Further, the metal film 32 of the present exemplary embodiment is formed so as to extend from the obverse metal film 32A that is at the obverse of the cover glass 30, via the side surfaces (the side surface metal film 32B), to the reverse (the reverse metal film 32C). Therefore, the heat receiving surface at the cover glass 30 is wide as compared with a case in which only the obverse metal film 32A, to which the heat generating portion 40A is affixed, is made to be the metal film 32. At the metal film 32, the heat, that is received at the surface of the obverse metal film 32A which surface is affixed to the heat generating portion 40A, is immediately transferred from the obverse metal film 32A to the side surface metal film 32B and to the reverse metal film 32C. Namely, the cover glass 30 receives heat from all of the portions other than the range of the angle of view of the camera 26 at which the metal film 32 is not provided. As described above, in accordance with the present exemplary embodiment, when rain, frost, dew or the like sticks to the cover glass 30, the time required to eliminate the rain, frost, dew or the like can be shortened, and the time until visibility is ensured is shortened.

Further, in the conventional imaging device 10, the heat generating portion 40A and the waterproof tape 34 are directly adhered to the glass surface of the cover glass 30. Here, at the waterproof tape 34 that serves as double-sided tape, the adhesive force is reduced when the waterproof tape 34 is wet by water at times of being inundated by rain or the like, and therefore, it is difficult to ensure the waterproof performance of the camera unit 20.

In contrast, in the present exemplary embodiment, the heat generating portion 40A and the waterproof tape 34 are adhered to the metal film 32 (the obverse metal film 32A and the reverse metal film 32C) at which it is difficult for the adhesive force at times of being wet by water to decrease, as compared with glass. Accordingly, the adhesive force of the heat generating portion 40A and the waterproof tape 34 is ensured also at times of inundation by rain or the like, and therefore, separating of the heat generating portion 40A can be suppressed, and the waterproof performance of the camera unit 20 can be ensured.

Further, as shown in Fig. 2 and Fig. 3, in the present exemplary embodiment, by the waterproof tape 34, the cover glass 30 and the camera 26 form the first sealed portion S1, and the cover glass 30 and the camera bracket 28 form the second sealed portion S2. Namely, it can be said that, owing to the single waterproof tape 34, the camera unit 20 of the present exemplary embodiment has a double sealed portion of the first sealed portion S1 that is the sealed portion at the inner peripheral side and the second sealed portion S2 that is the sealed portion at the outer peripheral side. Further, when the camera unit 20 of the present exemplary embodiment is exposed to jetting of water by high-pressure car washing or the like from the side of the exposure hole 24A, it is possible that the penetration of water is suppressed or prevented at the second sealed portion S2, and, in addition, the penetration of water is suppressed or prevented at the first sealed portion S1 as well. Due to the waterproof tape 34 forming a double sealed portion as described above, the waterproof quality of the camera 26 is maintained. Further, because the waterproof tape 34 maintains the airtightness of the space that is sandwiched between the lens 27 of the camera 26 and the cover glass 30, fogging of the lens 27 and the cover glass 30 in a case in which the outside temperature drops suddenly can be suppressed.

The heat generating unit 40 of the present exemplary embodiment is accommodated at the interior of the visor 22 as follows. Namely, as shown in Fig. 5, at the heat generating unit 40 at the time of manufacturing, the heat generating portion 40A, the connecting portion 40B and the base portion 40C are in an unfolded state. When the heat generating unit 40 is to be accommodated at the interior of the visor 22, as shown in Fig. 2, the heat generating unit 40 is folded substantially at a right angle at the connecting portion 40B such that the terminal 44 side surface of the heat generating unit 40 is mountain folded. Then, the surface, which is at the side opposite the terminal 44, of the base portion 40C is affixed to the side surface (the outer peripheral surface) of the camera bracket 28. By affixing the heat generating portion 40A to the cover glass 30, the heat generating unit 40 is accommodated at the interior of the visor 22 in a state in which the heat generating portion 40A and the base portion 40C are orthogonal.

As described above, before being accommodated at the interior of the visor 22, the heat generating unit 40 of the present exemplary embodiment is shaped as a sheet that is wider than the cover glass 30. On the other hand, due to the heat generating unit 40 being folded at the connecting portion 40B at the time when the heat generating unit 40 is to be accommodated at the interior of the visor 22, space in the vehicle width direction of the camera 26 can be saved.

Further, at the heat generating unit 40 of the present exemplary embodiment, the width (dimension in a direction orthogonal to a direction along which the heat generating portion 40A, the connecting portion 40B and the base portion 40C are arranged) of the connecting portion 40B is more narrow than the width of the heat generating portion 40A and the width of the base portion 40C, and the connecting portion 40B is a constricted portion at the heat generating unit 40. Due thereto, when the heat generating unit 40 is folded, the reaction force that tries to undo the folding (the reaction force that tries to return to a state of not being folded from a state of being folded) can be reduced, and the heat generating unit 40 can be folded easily.

Further, in the present exemplary embodiment, when the heat generating unit 40 is folded and is accommodated at the interior of the visor 22, at the inner surface of the visor 22 (the main body portion 22A), the rib 25 that projects-out in the insertion direction of the connector 50 can abut the connector 50. Namely, the rib 25 restricts movement of the connector 50 in the direction opposite the insertion direction, and the connector 50 coming away from the terminal 44 is suppressed. Further, the rib 25 restricts movement of the terminal 44 via the connector 50, and, due thereto, separating of the base portion 40C, which is affixed to the side surface of the camera bracket 28, is suppressed. In the present exemplary embodiment, the connector 50 is not fixed directly to the cover glass 30 (the heat generating portion 40A). Further, when load acts on the connector 50, because the load is absorbed at the connecting portion 40B, the load that acts on the connector 50 extending to the cover glass 30 is suppressed.

Note that, in a state in which the heat generating unit 40 is folded and is accommodated at the interior of the visor 22 (in the assembled state), it is preferable there is a small gap between the rib 25 and the connector 50, on the other hand, it is also preferable that the rib 25 abuts the connector 50. Further, it is possible that the rib 25 has higher elasticity than the visor 22.

Note that, in the present exemplary embodiment, the obverse metal film 32A and the reverse metal film 32C of the metal film 32, the heat generating portion 40A of the heat generating unit 40, and the waterproof tape 34 are formed in annular shapes in accordance with the range of the angle of view of the camera 26, but are not limited to this. Namely, these structures may be formed in rectangular shapes in accordance with the image receiving range of the image sensor of the camera 26 in the range of the angle of view of the camera 26.

### [Second Exemplary Embodiment]

At the imaging device 10 relating to a second exemplary embodiment, the structure of the metal film 32 that is provided at the cover glass 30 differs from that of the above-described first exemplary embodiment. Note that the other structures are similar to those of the above-described first exemplary embodiment.

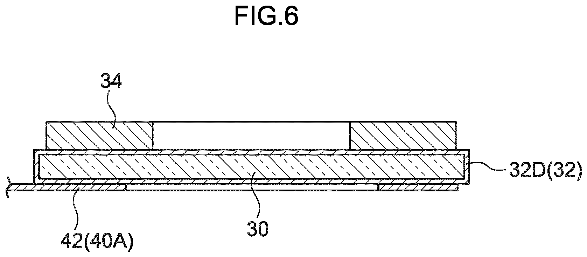

An enlarged sectional view of the cover glass 30 of the second exemplary embodiment and objects attached thereto is shown in Fig. 6. As shown in Fig. 6, the metal film 32 of the present exemplary embodiment is formed as a transparent electrode film 32D that is provided at all of the surfaces (the obverse, the side surfaces and the reverse) of the cover glass 30.

The transparent electrode film 32D is a film that is made of a transparent metal such as ITO (indium tin oxide) or the like, and is formed by vapor deposition on the glass surfaces of the cover glass 30. Note that the method of forming the transparent electrode film 32D is not limited to vapor deposition, and a spattering method can be employed.

In accordance with the transparent electrode film 32D of the present exemplary embodiment, in the same way as in the first exemplary embodiment, when rain, frost, dew or the like sticks to the cover glass 30, the time required to remove the rain, frost, dew or the like can be shortened, and the time until the visibility is ensured is shortened. In particular, the transparent electrode film 32D of the present exemplary embodiment is provided also within the range of the angle of view of the camera 26 at the cover glass 30, and the region of the cover glass 30 that is within the range of the angle of view of the camera 26 also can be made to be a heat receiving surface. Accordingly, at the transparent electrode film 32D of the present exemplary embodiment, the time for transferring heat to the central portion of the cover glass 30 is shortened further, and therefore, it is difficult for water droplets to remain at the central portion of the cover glass 30.

Further, in the same way as in the first exemplary embodiment, at the transparent electrode film 32D, the adhesive force of the heat generating portion 40A and the waterproof tape 34 is ensured also at times of inundation by rain or the like. Therefore, separating of the heat generation portion 40A can be suppressed, and the waterproof performance of the camera unit 20 can be ensured.

### [Third Exemplary Embodiment]

At the imaging device 10 relating to the third exemplary embodiment, the structure of the metal film 32 that is provided at the cover glass 30 differs from those of the above-described first exemplary embodiment and second exemplary embodiment. Note that other structures are similar to those of the above-described first exemplary embodiment and second exemplary embodiment.

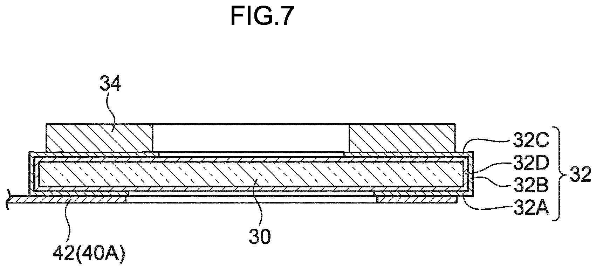

An enlarged sectional view of the cover glass 30 of the third exemplary embodiment and objects attached thereto is shown in Fig. 7. As shown in Fig. 7, at the metal film 32 of the present exemplary embodiment, the transparent electrode film 32D is provided at all of the surfaces (the obverse, the side surfaces and the reverse) of the cover glass 30. Further, the metal film 32 has the obverse metal film 32A that is annular and is provided at the vehicle rear side surface (the obverse), the side surface metal film 32B that is provided at the entire region of the outer peripheral surface (the side surfaces), and the reverse metal film 32C that is annular and is provided at the vehicle front side surface (the reverse), with respect to the transparent electrode film 32D.

The obverse metal film 32A, the side surface metal film 32B and the reverse metal film 32C of the present exemplary embodiment are films that are made of metal and are opaque in the same way as in the first exemplary embodiment, and the method of forming these films on the cover glass 30 is as described above. Further, in the same way as in the second exemplary embodiment, the transparent electrode film 32D is a film that is made of a transparent metal such as ITO (indium oxide) or the like, and the method of forming this film on the cover glass 30 is as described above.

Further, the obverse metal film 32A and the reverse metal film 32C of the present exemplary embodiment are provided in accordance with the range of the angle of view of the camera 26. At the cover glass 30, at the range thereof at which the opaque, metal film is not provided, i.e., the portion that is the opening, the obverse metal film 32A is wider than the reverse metal film 32C.

In accordance with the metal film 32 of the present exemplary embodiment, effects that are similar to those of the second exemplary embodiment are exhibited. In particular, at the transparent electrode film 32D, in a case in which the thickness of the film cannot be increased in order to ensure the degree of transparency of the cover glass 30, the thermal conductivity can be improved by adding the obverse metal film 32A, the side surface metal film 32B and the reverse metal film 32C, which are opaque metal films, to the region of the cover glass 30 that is outside of the range of the angle of view of the camera 26.

A heat generating device 40 has a heating portion 40A at which is provided a heating body 42 that heats a light transmitting member 30 that covers an obverse side of a lens 27 of an imaging section 26; a base portion 40C that is provided at a side surface of a holding member 28 that holds the imaging section 26, and at which is provided a terminal that supplies electric power to the heating body 42; and a connecting portion 40B that connects the heating portion 40A and the base portion 40C and is foldable.

## Claims

1. A heat generating device (40) for an imaging section (26), comprising:
a heating portion (40A) at which is provided a heating body (42) that heats a light transmitting member (30) that covers an obverse side of a lens (27) of the imaging section (26);
a base portion (40C) that is fixed to a holding member (28) that holds the imaging section (26), and at which a terminal (44) that supplies electric power to the heating body (42) is provided; and
a connecting portion (40B) that connects the heating portion (40A) and the base portion (40C), and that is foldable,
**characterized in that**
a metal layer (32) is provided at a surface of the light transmitting member (30),
the heating portion (40A) is affixed to the metal layer (32), and
the heat generating device (40) is a sheet-shaped member that is flexible.

2. The heat generating device (40) for an imaging section (26) of claim 1, wherein:
the heating portion (40A), the connecting portion (40B) and the base portion (40C) are integrally formed, and
the connecting portion (40 B) is configured as a constricted portion of the heat generating device (40).

3. An imaging device (10), comprising:
the heat generating device (40) of claim 1 or claim 2;
a covering body (22) in which the heat generating device (40) and the holding member (28) are accommodated;
a connector (50) that is connected to the terminal (44) by being inserted therein; and
a rib (25) that projects out in an insertion direction of the connector (50) at an inner surface of the covering body (22), and that can abut the connector (50) in a case in which the covering body (22) is mounted.

## Patentansprüche

1. Wärmeerzeugungsvorrichtung (40) für einen Abbildungsbereich (26), mit:
einem Heizungsabschnitt (40A), an welchem ein Heizungskörper (42) vorgesehen ist, der ein Lichtübertragungselement (30) heizt, das eine Vorderseite einer Linse (27) des Abbildungsbereichs (26) abdeckt;
einem Basisabschnitt (40C), der an einem Halteelement (28) fixiert ist, das den Abbildungsbereich (26) hält und an welchem ein Anschluss (44) vorgesehen ist, der dem Heizungskörper (42) elektrische Leistung zuführt; und
einem Verbindungsabschnitt (40B), der den Heizungsabschnitt (40A) und den Basisabschnitt (40C) verbindet und der faltbar ist,
**dadurch gekennzeichnet, dass**
eine Metallschicht (32) an einer Fläche des Lichtübertragungselements (30) vorgesehen ist,
der Heizungsabschnitt (40A) an der Metallschicht (32) angebracht ist und
die Wärmeerzeugungsvorrichtung (40) ein blattförmiges Element ist, das flexibel ist.

2. Wärmeerzeugungsvorrichtung (40) für einen Abbildungsbereich (26) nach Anspruch 1, wobei:
der Heizungsabschnitt (40A), der Verbindungsabschnitt (40B) und der Basisabschnitt (40C) einstückig ausgebildet sind und
der Verbindungsabschnitt (40 B) als ein beschränkter Abschnitt der Wärmeerzeugungsvorrichtung (40) konfiguriert ist.

3. Abbildungsvorrichtung (10), mit:
der Wärmeerzeugungsvorrichtung (40) nach Anspruch 1 oder 2;
einem Abdeckungskörper (22), in welchem die Wärmeerzeugungsvorrichtung (40) und das Halteelement (28) aufgenommen sind;
einem Verbindungsstück (50), das mit dem Anschluss (44) verbunden ist, indem es darin eingesetzt ist; und
einer Rippe (25), die in einer Einsetzrichtung des Anschlussstücks (50) an einer Innenfläche des Abdeckungskörpers (22) auswärts vorsteht und die in einem Fall, in welchem der Abdeckungskörper (22) montiert ist, an dem Anschlussstück (50) anliegen kann.

## Revendications

1. Dispositif de génération de chaleur (40) pour une section d'imagerie (26), comprenant :
une partie de chauffage (40A) au niveau de laquelle est prévu un corps chauffant (42) qui chauffe un élément de transmission de lumière (30) qui couvre un côté avers d'une lentille (27) de la section d'imagerie (26) ;
une partie de base (40C) qui est fixée à un élément de maintien (28) qui maintient la section d'imagerie (26), et au niveau de laquelle est prévue une borne (44) qui fournit de la puissance électrique au corps chauffant (42) ; et
une partie de connexion (40B) qui connecte la partie de chauffage (40A) et la partie de base (40C), et qui est pliable,
**caractérisé en ce que**
une couche de métal (32) est prévue sur une surface de l'élément de transmission de lumière (30),
la partie de chauffage (40A) est fixée à la couche de métal (32), et
le dispositif de génération de chaleur (40) est un élément en forme de feuille qui est flexible.

2. Dispositif de génération de chaleur (40) pour une section d'imagerie (26) selon la revendication 1, dans lequel :
la partie de chauffage (40A), la partie de connexion (40B) et la partie de base (40C) sont formées d'un seul tenant, et
la partie de connexion (40B) est configurée comme une partie rétrécie du dispositif de génération de chaleur (40).

3. Dispositif d'imagerie (10), comprenant :
le dispositif de génération de chaleur (40) selon la revendication 1 ou la revendication 2 ;
un corps de couverture (22) dans lequel le dispositif de génération de chaleur (40) et l'élément de maintien (28) sont reçus ;
un connecteur (50) qui est connecté à la borne (44) en étant inséré dans celle-ci ; et
une nervure (25) qui fait saillie dans une direction d'insertion du connecteur (50) sur une surface intérieure du corps de couverture (22), et qui peut venir en butée contre le connecteur (50) dans un cas dans lequel le corps de couverture (22) est monté.
